# EUROPÄISCHE PATENTSCHRIFT

(11) **EP 1 755 380 B1**
(45) Veröffentlichungstag und Bekanntmachung des Hinweises auf die Patenterteilung: **18.03.2009**
(21) Anmeldenummer: 05745245.0
(22) Anmeldetag: 21.05.2005
(51) Int. Cl.: A01N 25/04, A01N 25/30, A01N 57/20

(54) **KONZENTRIERTE PFLANZENSCHUTZMITTELDISPERSIONEN AUF WASSERBASIS**
WATER-BASED CONCENTRATED AGRICULTURAL PESTICIDE DISPERSIONS
DISPERSIONS CONCENTREES AQUEUSES D'AGENTS PHYTOSANITAIRES

(30) Priorität: 01.06.2004 DE 102004026935
(43) Veröffentlichungstag der Anmeldung: 28.02.2007
(73) Patentinhaber: Bayer CropScience AG, 40789 Monheim (DE)
(72) Erfinder: FRISCH, Gerhard, 61273 Wehrheim (DE); MAIER, Thomas, 65719 Hofheim (DE)
(86) Internationale Anmeldenummer: PCT/EP2005/005523
(87) Internationale Veröffentlichungsnummer: WO 2005/117582

(56) Entgegenhaltungen:
- EP-A- 0 130 370
- EP-A- 0 297 305
- EP-A- 0 499 798
- EP-A- 1 095 564
- WO-A-96/22692
- WO-A-20/04021789
- CH-A- 459 658
- US-A- 4 351 754
- DATABASE CHEMABS [Online] CHEMICAL ABSTRACTS SERVICE, COLUMBUS, OHIO, US; XP002359292 gefunden im STN-INTERNATIONAL Database accession no. 116:230204 & JP 04 009307 A (KUMIAI CHEMICAL INDUSTRIES) 14. Januar 1992 (1992-01-14)

## Beschreibung

Die Erfindung betrifft das technische Gebiet der Zubereitungen (Formulierungen) für Wirkstoffe auf dem Pflanzenschutzgebiet (für agrochemische Wirkstoffe), speziell konzentrierte wäßrige Formulierungen von mehreren Pflanzenschutzmittelwirkstoffen (Coformulierungen), insbesondere wäßrige Formulierungen von salzartigen Pflanzenschutzmittelwirkstoffen, wie Glufosinate-ammonium, mit weitgehend wasserunlöslichen Pflanzenschutzmittelwirkstoffen.

Pflanzenschutzmittel können prinzipiell auf viele verschiedene Arten formuliert werden, wobei die Eigenschaften der Wirkstoffe und Art der Formulierung Probleme hinsichtlich der Stabilität, Wirksamkeit und Anwendbarkeit der Formulierungen aufwerfen können. Außerdem sind bestimmte Formulierungen aus ökonomischen und ökologischen Gründen vorteilhafter als andere.

Formulierungen auf Wasserbasis haben in der Regel den Vorteil, dass sie einen geringen Anteil oder keinen Anteil an organischen Lösungsmitteln benötigen. Andererseits weisen solche Formulierungen oft eine ungenügende Verteilung der Inhaltsstoffe auf, wenn nicht geeignete Kombinationen von Hilfstoffen eingesetzt werden. Die anwendungstechnischen Eigenschaften solcher Formulierungen hängen häufig von vielen variablen Parametern ab, so dass es nicht möglich ist, Komponenten von bekannten Systemen einfach auszuwählen und mit den neu zu formulierenden Wirkstoffen zu kombinieren, wenn die resultierende Formulierung biologisch wirksam, lagerstabil und applikationstechnisch einwandfrei sein soll.

Standardformulierungen sind somit selten geeignet, besondere Anforderungen zu erfüllen, und man muss sich der Mühe unterziehen, durch viel Versuchsarbeit eine angemessene Rezeptur zu entwickeln.

Unter wässrigen konzentrierten Formulierungen sind hier in erster Linie solche zu verstehen, die Wasser als Trägerphase haben. Dies soll nicht ausschließen, dass organische Lösungmittel in gelöster oder stabil emulgierter Form vorhanden sein können. Dabei kommen vor allem ganz mit Wasser mischbare organische Lösungsmittel in Frage. Vorzugsweise enthalten die Formulierungen keine nicht mit wasser mischbaren organischen Lösungsmittel.

Die Wirkstoffe können in den wäßrigen Formulierungen gelöst oder in Form kleiner Partikel dispergiert oder teilweise gelöst und teilweise dispergiert sein. Beispiele für Formulierungen mit einem Wirkstoff in gelöster Form (Glufosinate-ammonium) sind aus EP-A-0048436 bekannt. Beispiele für Formulierungen mit in Wasser dispergierten Wirkstoffen (z. B. Isoproturon) sind in DE-A-2924403 beschrieben. Aus EP-A-0297305 sind Coformulierungen von einem in gelöster Form enthaltenen Wirkstoff (z. B. Glufosinate, Glyphosate, Paraquat, CMPP, 2,4-D, 2,4-DP, MCPA) und mindestens einem in dispergierter Form enthaltenen Wirkstoff bekannt (z. B. Triazine wie Simazin, Atrazin, Cyanazin, Phenylharnstoffe wie Isoproturon, Chlortoluron, Linuron, Monolinuron, Diuron, Pyridine wie Trichlopyr oder Fluroxypyr, Hydroxybenzonitrile wie Bromoxynil und loxynil, Diphenylether wie Oxyfluorfen oder Deltamethrin, Carbendazim oder Endosulfan). CH 459658 beschreibt herbizide Suspensionen, die ein wasserlösliches und ein wasserunlösliches organisches Herbizid sowie hochmolekulare Suspendiermittel enthalten.

Neben van der Waals'schen Kräften, elektrischen, sterischen und entropischen Einflüssen spielen Formfaktoren eine große Rolle, um dispergierte Systeme über längere Zeit physikalisch stabil zu halten. Gute Lagereigenschaften lassen sich auch mit entsprechenden geeigneten Stabilisatoren, Verdickern, thixotropen Hilfsmitteln etc. erreichen.

Es bestand die Aufgabe, eine konzentrierte Coformulierung auf Wasserbasis bereitzustellen, welche für die Kombination eines oder mehrerer in Wasser löslicher Wirkstoffe und eines oder mehrerer in Wasser dispergierter Wirkstoffe geeignet ist.

Gegenstand der Erfindung sind flüssige wäßrige Pflanzenschutzmittel, dadurch gekennzeichnet, dass sie
(a) einen oder mehrere in Wasser lösliche Pflanzenschutzmittelwirkstoffe (Wirkstoffe vom Typ (a)),
(b) einen oder mehrere in Wasser als feste Partikel dispergierte Pflanzenschutzmittelwirkstoffe (Wirkstoffe vom Typ (b)),
(c) ein oder mehrere Tenside aus der Klasse der Polyacrylsäurederivate,
(d) ein oder mehrere Aluminiumsilikate als Stabilisator,
(e) gegebenenfalls weitere anionaktive oder auch nichtionogene, kationaktive und/oder zwitterionische Tenside,
(f) gegebenenfalls andere übliche Formulierungshilfsmittel und
(g) Wasser
enthalten.

Die hier vorliegende Erfindung betrifft ein System, in der ein oder mehrere Wirkstoffe in der Trägerphase gelöst sind und ein oder mehrere Wirkstoffe in der Trägerphase als feine feste Partikel dispergiert sind. Die Trägerphase selbst besteht vorzugsweise aus Wasser, die dann auch die Tenside und/oder viskositätsbeeinflussende Materialien und/oder andere Formulierungshilfsmittel wie Frostschutzmittel und/oder Entschäumer und/oder Bakterizide und/oder anderweitige das System stabilisierende Mittel enthalten kann.

Bekannt ist auch eine Formulierung, wo statt fein dispergierter Partikel fein emulgierte Tropfen mit den infrage kommenden Wirkstoffen in gelöster Form beschrieben werden (WO96/22692). Hier ist von Nachteil, daß man keine lösungsmittelfreie, nur auf Wasser basierende Formulierung erhält.

Die erfindungsgemäßen wässrigen Formulierungen können als in Wasser gelöste Wirkstoffe (oder auch Kombinationen davon) beispielsweise solche aus der Gruppe der wasserlöslichen Pflanzenschutzmittelwirkstoffe wie Glufosinate, Glyphosate, Paraquat, Diquat und ähnliche wie MCPA, CMPP, loxynil, Bromoxynil, 2,4-D, TCA, 2,4-DP und vorzugsweise deren Salze enthalten.

Bevorzugt sind Formulierungen mit Wirkstoffen vom Typ (a) aus der Gruppe enthaltend eine oder mehrere Verbindungen der Formel (1) oder deren Salze, 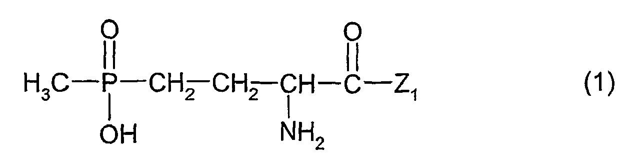 worin
Z₁ einen Rest der Formel -OM, -NHCH(CH₃)CONHCH(CH₃)CO₂M oder
-NHCH(CH₃)CONHCH[CH₂CH(CH₃)₂]CO₂M und dabei
M = H oder ein Salz bildendes Kation bedeuten,
und/oder eine oder mehrere Verbindungen der Formel (2) oder deren Salze, 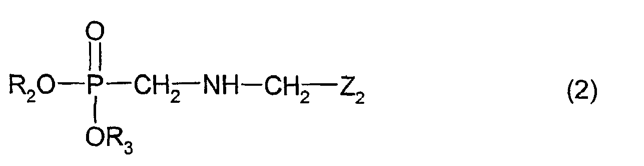 worin
Z₂ einen Rest der Formel CN oder CO₂R₁ bedeutet, in dem R₁ = Q oder ein Salz bildendes Kation ist und dabei Q = H, Alkyl, Alkenyl, Alkoxyalkyl oder C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, und
R₂,R₃ jeweils unabhängig voneinander H, Alkyl, C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, oder Biphenyl oder ein Salz bildendes Kation bedeuten.

Vorzugsweise haben die kohlenstoffhaltigen Reste in Zusammenhang mit Q, R₂, bzw. R₃ bis zu 10 C-Atome, insbesondere bis zu 6 C-Atome.

Die Verbindungen der Formel (1) enthalten ein asymmetrisches C-Atom. Das L-Enantiomere wird dabei als biologisch aktives Isomer angesehen. Die Formel (1) umfaßt daher alle Stereoisomeren und deren Gemische, insbesondere das Racemat und das jeweils biologisch wirksame Enantiomer. Beispiele für Wirkstoffe der Formel (1) sind folgende:
◆ Glufosinate und dessen Ammoniumsalz in racemischer Form, d.h. 2-Amino-4-[hydroxy(methyl)phosphinoyl]-butansäure bzw. dessen Ammoniumsalz,
◆ das L-Enantiomer von Glufosinate und dessen Ammoniumsalz,
◆ Bilanafos/Bialaphos, d.h. L-2-Amino-4-[hydroxy(methyl)phosphinoyl]-butanoyl-L-alaninyl-L-alanin und dessen Natriumsalz.

Das Racemat von Glufosinate-ammonium wird alleine üblicherweise in Dosierungen ausgebracht, die zwischen 200 und 1000 g a.i./ha (=Gramm Aktivsubstanz pro Hektar) liegen. Glufosinate-ammonium ist in diesen Dosierungen vor allem dann wirksam, wenn es über grüne Pflanzenteile aufgenommen wird; siehe "The Pesticide Manual" 13th Edition, British Crop Protection Council 2003. Glufosinate-ammonium wird vorwiegend zur Bekämpfung von Unkräutern und Ungräsern in Plantagenkulturen und auf Nichtkulturland sowie mittels spezieller Applikationstechniken auch zur Zwischenreihenbekämpfung in landwirtschaftlichen Flächenkulturen wie Mais, Baumwolle u.a. eingesetzt. Zunehmende Bedeutung hat auch der Einsatz in transgenen Kulturen, welche gegenüber dem Wirkstoff resistent oder tolerant sind.

Bei den Verbindungen der Formel (2) handelt es sich um N-(Phosphonoalkyl)-glycin und damit um Derivate der Aminosäure Glycin. Die herbiziden Eigenschaften von N-(Phosphonomethyl)-glycin ("Glyphosate") sind z. B. in der US-Patentschrift Nr. 3799758 beschrieben.

In der Regel wird Glyphosate in Pflanzenschutzformulierungen in Form der wasserlöslichen Salze verwendet, wobei im Zusammenhang mit der vorliegenden Erfindung vor allem das Isopropylammoniumsalz von Bedeutung ist; siehe "The Pesticide Manual" 13th Edition, British Crop Protection Council 2003.

Der Anteil der Wirkstoffe (a) kann breit variiert werden und ist in der Regel im Bereich von 1 bis 60 Gew.-%, vorzugsweise von 5 bis 55 % Gew.-% und ganz besonders bevorzugt von 8 bis 35 % Gew.-% Wirkstoff (a) bezogen auf das Gewicht der Formulierung.

Als Wirkstoffe vom Typ (b), die als feinvermahlene Partikel sich in der dispergierten Phase befinden, kommen beispielsweise folgende in Frage: Herbizide aus der Gruppe der Diphenylether, Carbamate, Thiocarbamate, Triphenylzinn- und Tributylzinnverbindungen, Halogenacetanilide, Phenoxyphenoxyalkancarbonsäurederivate sowie Heteroaryloxyphenoxyalkancarbonsäurederivate, wie Chinolyloxy-, Chinoxalyloxy-, Pyridyloxy-, Benzoxalyloxy- und Benzthiazolyloxyphenoxyalkancarbonsäureester.

Auch entsprechend unlösliche Wirkstoffe aus Stoffklassen, welche normalerweise Wirkstoffe unterschiedlicher Löslichkeiten enthalten kommen in Frage, z.B. Wirkstoffe aus der Gruppe der Cyclohexandionabkömmlinge, Imidazolinone, Pyrimidyloxypyridincarbonsäure-derivate, Pyrimidyloxy-benzoesäure-derivate, Sulfonylharnstoffe, Triazolopyrimidin-sulfonamid-derivate sowie S-(N-Aryl-N-alky(carbamoylmethyl)-dithiophosphor-säureester, beispielsweise Wirkstoffe wie Oxyfluorfen, Lactofen, Bifenox, Fluoroglycofen, Acifluorfen, Fomesafen, Diclofop-methyl, Fenoxaprop-ethyl oder Fenoxaprop-P-ethyl.

Die genannten Kurzbezeichnungen ("common names") für die Wirkstoffe wie Glufosinate, Glyphosate, Oxyfluorfen, MCPA, 2,4-D usw. sind allgemein bekannt; siehe beispielsweise "The Pesticide Manual" 13th Edition, British Crop Protection Council 2003; sie umfassen dabei auch die bekannten Derivate wie Salze, Ester, Amide und dabei insbesondere die handelsüblichen Formen.

Entsprechend den genannten Herbiziden können auch Wirkstoffe aus der Gruppe der Safener, Pflanzenwachstumsregulatoren, Insektizide und Fungizide als Komponente (b) bzw. bei guter Wasserlöslichkeit als Komponenten (a) in Frage kommen.

Die Art der verwendeten Wirkstoffe vom Typ (a) und (b) bestimmen den Typ der Schadorganismen, welche durch die Anwendung der Pflanzenschutzmittel oder agrochemischen Formulierungen kontrolliert werden können. Im Falle von Herbiziden sind die Schadorganismen unerwünschte Pflanzen.

Der Anteil der Wirkstoffe (b) ist in der Formulierung in der Regel im Bereich von 0,5 bis 30 Gew.-%, vorzugsweise von 1 bis 20 Gew.-%, insbesondere von 1 bis 15 Gew.-% Wirkstoff bezogen auf das Gewicht der Formulierung.

Das Gewichtsverhältnis von gelösten Wirkstoffen (a) zu dispergierten Wirkstoff(en) (b) in der Formulierung hängt zweckmäßig von der Wirksamkeit der einzelnen Wirkstoffe und den physikalischen Eigenschaften ab und beträgt beispielsweise 15:1 bis 1:12, vorzugsweise 10:1 bis 1:4.

Erfindungsgemäß wird die Formulierung durch eine Kombination der Komponenten (c) und (d) stabilisiert. Erst nach einer Vielzahl von Versuchen hat sich überraschenderweise gezeigt, dass wäßrige Coformulierungen mit den genannten physikalisch sehr unterschiedlichen Wirkstoffen (a) und (b), besonders wenn die genannten Wirkstoffe (a) als Salze gelöst sind und die Formulierungen zudem noch einen hohen Netzmittelanteil haben, sehr gut durch eine Kombination eines Tensids aus der Klasse der Polyacrylsäurederivate (Komponente (c)) und eines Stabilisators aus der Gruppe der Aluminiumsilikate (Komponente (d)) stabilisiert werden können.

Als Komponente (c) eignen sich Polyacrylsäurederivate wie beispielsweise
- ®Sokalan CP10 (das Natriumsalz einer modifizierten Polyacrylsäure; BASF)
- Polyacrylate aus der Reihe ®Sokalan CP 13 S, PA 15, PA 20, PA 20 S, PA 25, PA 30, PA 40, PA 50, PA 70 PN, 80 S (BASF);
- Polyacrylatcopolymere wie die aus der ®Carbopol Reihe (Noveon Inc., früher B. F. Goodrich Co.);
- Ammonium- und Natriumpolyacrylate aus der ®Degapas-Reihe (Degussa);
- Dispersant HB (Natriumpolyacrylat, Rhodia),
- ®Permulsin (Na-Polyacrylat, Polygon Chemie).

Bei dem Stabilisator aus der Gruppe der Aluminiumsilikate (Komponente (d)) handelt es sich vorzugsweise um eine Mineralstofffaser, beispielsweise ein faser-stoffartiges Magnesium- und Aluminiumsilikat-Attapulgit, vorzugsweise ®Clarsol ATC (Firma CECA, Düsseldorf). Geeignet sind auch ®Bentone EW (Firma Rheox) oder Attapulgit Select 615® (Firma Oil Dry), die ebenfalls Attapulgit als Basismaterial enthalten.

Das Polyacrylsäurederivat (c) ist in der Formulierung in der Regel im Bereich von 0,05 bis 15 Gew.-%, vorzugsweise mit 0,1 bis 10 Gew.-%, insbesondere mit 0,4 bis 5 Gew.-% enthalten. Das Aluminiumsilikat (d) ist in der Regel im Bereich von 0,05 bis 15 Gew.-%, vorzugsweise von 0,1 bis 8 Gew.-%, insbesondere von 0,3 bis 5 Gew.-% in der Formulierung enthalten.

Das Gewichtsverhältnis von Tensid zu Aluminiumsilikat beträgt vorzugsweise 15:1 bis 1:20, insbesondere 10:1 bis 1:14.

Die erfindungsgemäßen Formulierungen enthalten als Komponente (e) gegebenenfalls anionaktive, kationaktive oder zwitterionische und/oder nichtionogene oberflächenaktive Verbindungen (Tenside) welche zu einer verbesserten Stabilität, Verfügbarkeit für die Pflanzen oder Wirkung der formulierten Pflanzenschutzmittel beitragen können.

Beispiele für anionaktive Tenside sind (wobei EO=Ethylenoxid-Einheiten, PO=Propylenoxid-Einheiten und BO=Butylenoxid-Einheiten bedeuten):
e1-1) Anionische Derivate von Fettalkoholen mit 10 - 24 Kohlenstoffatomen mit 0-60 EO und/oder 0-20 PO und/oder 0-15 BO in beliebiger Reihenfolge in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis) wie Genapol^{®}LRO, Sandopan^{®}-Marken, Hostaphat/Hordaphos^{®}-Marken von Clariant;
e1-2) anionische Derivate von Copolymeren bestehend aus EO-, PO- und/oder BO-Einheiten mit einem Molekulargewicht von 400 bis 10⁸ in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis);
e1-3) anionische Derivate von Alkylenoxydaddukten von C₁ - C₉ Alkoholen in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis);
e1-4) anionische Derivate von Fettsäure-alkoxylaten in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis).

Bevorzugte anionaktive Tenside sind dabei
Alkylpolyglykolethersulfate, insbesondere Fettalkoholdiethylenglykolethersulfat (z. B. Genapol LRO^{®}, Clariant), oder
Alkylpolyglykolethercarboxylate (z. B. 2-(Isotridecyloxy-polyethylenoxy)-ethyl-carboxymethyl-ether, Marlowet 4538^{®}, Hüls)

Beispiele für kationaktive oder zwitterionische Tenside sind (wobei EO=EthylenoxidEinheiten, PO=Propylenoxid-Einheiten und BO=Butylenoxid-Einheiten bedeuten):
e2-1) Alkylenoxidaddukte von Fettaminen, quartäre Ammonium-Verbindungen mit 8 bis 22 Kohlenstoffatomen (C₈-C₂₂) wie z.B. die Genamin^{®} C-, L-, O-, T-Marken von Clariant;
e2-2) oberflächenaktive, zwitterionische Verbindungen wie Tauride, Betaine und Sulfobetaine in Form von Tegotain^{®}-Marken von Goldschmidt, Hostapon^{®}T-und Arkopon^{®}T-Marken von Clariant.

Beispiele für nichtionogene Tenside sind:
e3-1) Fettalkohole mit 10-24 Kohlenstoffatomen mit 0-60 EO und/oder 0-20 PO und/oder 0-15 BO in beliebiger Reihenfolge. Beispiele für derartige Verbindungen sind Genapol^{®} C-, L-, O-, T-, UD-, UDD-, X-Marken von Clariant, Plurafac^{®}- und Lutensol^{®}A-, AT-, ON-, TO-Marken von BASF, Marlipal^{®}24 und 013 Marken von Condea, Dehypon^{®}-Marken von Henkel, Ethylan^{®}-Marken von Akzo-Nobel wie Ethylan CD 120;
e3-2) Fettsäure- und Triglyceridalkoxylate wie die Serdox^{®}NOG-Marken von Condea oder die Emulsogen^{®}-Marken von Clariant;
e3-3) Fettsäureamidalkoxylate wie die Comperlan^{®}-Marken von Henkel oder die Amam^{®}-Marken von Rhodia;
e3-4) Alkylenoxydaddukte von Alkindiolen wie die Surfynol^{®}-Marken von Air Products; Zuckerderivate wie Amino- und Amidozucker von Clariant;
e3-5) Glukitole von Clariant;
e3-6) oberflächenaktive Verbindungen auf Silikon- bzw Silanbasis wie die Tegopren^{®}-Marken von Goldschmidt und die SE^{®}-Marken von Wacker, sowie die Bevaloid^{®}-, Rhodorsil^{®}- und Silcolapse^{®}-Marken von Rhodia (Dow Corning, Reliance, GE, Bayer),
e3-7) grenzflächenaktive Sulfonamide z.B. von Bayer;
e3-8) grenzflächenaktive Polyacryl- und Polymethacrylderivate wie die Sokalan^{®}-Marken von der BASF;
e3-9) oberflächenaktive Polyamide wie modifizierte Gelatine oder derivatisierte Polyasparginsäure von Bayer und deren Derivate,
e3-10) tensidische Polyvinylverbindungen wie modifiziertes PVP wie die Luviskol^{®}-Marken von BASF und die Agrimer^{®}-Marken von ISP oder die derivatisierten Polyvinylacetate wie die Mowilith^{®}-Marken von Clariant oder die Polyvinylbutyrate wie die Lutonal^{®}-Marken von der BASF, die Vinnapas^{®}- und die Pioloform^{®}-Marken von Wacker oder modifizierten Polyvinylalkohole wie die Mowiol^{®}-Marken von Clariant,
e3-11) oberflächenaktive Polymere auf Basis von Maleinsäureanhydrid und/oder Umsetzungsprodukten von Maleinsäureanhydrid sowie Maleinsäureanhydrid und/oder Umsetzungsprodukte von Maleinsäureanhydrid beinhaltende Copolymere wie die Agrimer^{®}-VEMA-Marken von ISP,
e3-12) oberfächenaktive Derivate von Montan-, Polyethylen-, und Polypropylenwachsen wie die Hoechst^{®}-wachse oder die Licowet^{®}-Marken von Clariant,
e3-13) Sorbitanester in Form der Span^{®}- oder Tween^{®}-Marken von Uniqema,
e3-14) oberflächenaktive Cellulose-, Algin-, Pektin- und Guarderivate wie die Tylose^{®}-Marken von Clariant, die Manutex^{®}-Marken von Kelco und Guarderivate von Cesalpina,
e3-15) Alkylenoxydaddukte auf Polyolbasis wie Polyglykol^{®}-Marken von Clariant,
e3-16) grenzflächenaktive Polyglyceride und deren Derivate von Clariant.
e3-17) Alkylpolysaccharide und deren Mischungen wie beispielsweise aus der ®Atplus-Reihe (Uniqema) ohne oder mit Zusatz von anorganischen Salzen wie Ammoniumsulfat,
e3-18) Alkylpolyglycoside in Form der APG^{®}-Marken von Henkel, beispielsweise ®Plantaren APG 225 (Fettalkohol C₈-C₁₀-Glucosid),
e3-19)Cyclodextrinester oder -ether von Wacker,
e3-20)Alkylpolyglykosid-Alkylpolysaccharid-Mischungen auf Basis C₈-C₁₀-Fettalkohol wie ®Glucopon 225 DK und ®Glucopon 215 CSUP (Cognis).

Die erfindungsgemäßen Formulierungen enthalten als Komponente (f) übliche Formulierungshilfsmittel, beispielsweise Inertmaterialien, wie Haft-, Netz-, Dispergier-, Emulgier-, Penetrations-, Konservierungs- und Frostschutzmittel, Füll-, Träger- und Farbstoffe, Verdunstungshemmer und den pH-Wert (Puffer, Säuren und Basen) oder die Viskosität beeinflussende Mittel (z. B. Verdicker) oder Entschäumer. Der Zusatz von anorganischen Salzen kann besonders in Kombination mit manchen Tensiden von Vorteil sein.

Als Formulierungshilfsmittel kommen auch organische Lösungsmitteln in Frage, vor allem mit Wasser mischbare organische Lösungsmittel, beispielsweise
◆ aliphatische Alkohole, wie z.B. niedere Alkanole wie Methanol und Ethanol oder mehrwertige Alkohole wie Ethylenglykol, Glycerin,
◆ polare Ether wie Alkylenglykolmonoalkyether und -dialkylether wie z.B. Propylenglykolmonomethylether, Propylenglykolmonoethylether, Ethylenglykolmonomethylether oder -monoethylether, Diglyme und Tetraglyme;
◆ Amide wie Dimethylformamid (DMF), Dimethylacetamid, Dimethylcaprylamid, Dimethylcaprinamid (^{®}Hallcomide) und N-Alkylpyrrolidone;
◆ Ketone wie Aceton;
◆ Nitrile wie Acetonitril,
◆ Sulfoxide und Sulfone wie Dimethylsulfoxid (DMSO) und Sulfolan.

Bevorzugt sind dabei weitgehend mit Wasser mischbare organische Lösungsmittel wie beispielsweise N-Methylpyrrolidon (NMP), Dimethylformamid (DMF), Dimethylacetamid (DMA) oder Dowanol^{®} PM (Propylenglykol-monomethylether).

Die organischen Lösungsmittel sollen nur in solchen Mengen eingesetzt werden, dass die wäßrige Phase stabil ist, vorzugsweise als thermodynamisch stabile wäßrige Lösung vorliegt.

Übliche Formulierungshilfsmittel (f) sind beispielsweise die genannten Inertmaterialien, Frostschutzmittel, Verdunstungshemmer, Konservierungsmittel, Farbstoffe, u. a.; bevorzugte Formulierungshilfsmittel (f) sind
◆ Frostschutzmittel und Verdunstungshemmer wie Glycerin oder Ethylenglykol, z.B. in einer Menge von 2 bis 10 Gew.-% und
◆ Konservierungsstoffe, z.B. Mergal K9N^{®} (Riedel) oder Cobate C^{®},
◆ Entschäumer.

Bei den wäßrigen Formulierungen ist es oft zweckmäßig Entschäumer zuzusetzen. Als Entschäumer kommen alle üblichen Entschäumer in Frage, vorzugsweise Entschäumer auf Silikonbasis, wie beispielsweise Silikonöle. Bevorzugte Entschäumer sind solche aus der Gruppe der linearen Polydimethylsiloxane mit einer mittleren dynamischen Viskosität, gemessen bei 25°C, im Bereich von 1000 bis 8000 mPas (mPas = Millipascalsekunde), vorzugsweise 1200 bis 6000 mPas, und mit einem Gehalt an Kieselsäure. Unter Kieselsäure sind Formen/Modifikationen wie Polykieselsäuren, Metakieselsäure, Orthokieselsäure, Kieselgel, Kieselsäuregele, Kieselgur, gefälltes SiO₂ etc. zu verstehen.

Entschäumer aus der Gruppe der linearen Polydimethylsiloxane enthalten als chemisches Gerüst eine Verbindung der Formel HO-[Si(CH₃)₂-O-]ₙ-H, wobei die Endgruppen modifiziert, beispielsweise verethert oder in der Regel mit den Gruppen -Si(CH₃)₃ verbunden sind.

Der Gehalt an Kieselsäure kann in einem weiten Bereich modifiziert werden und liegt in der Regel im Bereich von 0,1 bis 10 Gewichtsprozent, vorzugsweise 0,2 bis 5 Gewichtsprozent, insbesondere 0,2 bis 2 Gew.-%, Kieselsäure bezogen auf das Gewicht an Polydimethylsiloxan.

Beispiele für derartige Entschäumer sind ®Rhodorsil Antifoam 416 (Rhodia) und ®Rhodorsil Antifoam 481 (Rhodia).

®Rhodorsil Antifoam 416 ist ein mittelviskoses Silikonöl mit einer dynamischen Viskosität bei 25 °C von etwa 1500 mPas und einem Gehalt an einem Tensid und Kieselsäure. Aufgrund des Tensidgehalts ist die Dichte gegenüber dem reinen Silikonöl reduziert und beträgt etwa 0,995 g/cm³.

®Rhodorsil Antifoam 481 ist ein mittelviskoses Silikonöl mit einer dynamischen Viskosität bei 25 °C von etwa 4500 mPas und einem Gehalt an Kieselsäure. Die Dichte beträgt etwa 1,045 g/cm³.

Weitere Entschäumer aus der Gruppe der Silikone sind Rhodorsil 1824, Antimussol 4459-2 (Clariant), Entschäumer V 4459 (Clariant), SE Visk und AS EM SE 39 (Wacker).

Die Silikonöle können auch als Emulsionen eingesetzt werden.

Die zur Herstellung der o.a. Formulierungen notwendigen Hilfsmittel wie insbesondere Tenside sind im Prinzip bekannt und werden beispielsweise beschrieben in: McCutcheon's "Detergents and Emulsifiers Annual", MC Publ. Corp., Ridgewood N.J.; Sisley and Wood, "Encyclopedia of Surface active Agents", Chem. PubI.Co.lnc., N.Y. 1964; Schönfeldt, "Grenzflächenaktive Äthylenoxidaddukte", Wiss. Verlagsgesellschaft, Stuttgart 1976; Winnacker-Küchler, "Chemische Technologie", Band 7, C. Hanser-Verlag, München, 4. Auflage 1986, und jeweils dort zitierte Literatur.

Mit Hilfe der Komponentenmischungen lassen sich demnach vorzugsweise wäßrige Zubereitungen von wasserlöslichen (salzartigen) Pflanzenschutzmittelwirkstoffen, wie Glufosinate-ammonium, herstellen, welche
(a) 1 bis 60 Gew.-%, vorzugsweise 5 bis 55 Gew.-%, insbesondere 8 bis 55 Gew.-%, in Wasser lösliche Pflanzenschutzmittelwirkstoffe (Wirkstoffe vom Typ (a)),
(b) 0,5 bis 30 Gew.-%, vorzugsweise 1 bis 20 Gew.-%, insbesondere 1 bis 15 Gew.-% in Wasser unlösliche als feste Partikel dispergierte Planzenschutzmittelwirkstoffe (Wirkstoffe vom Typ (b)),
(c) 0,05 bis 15 Gew.-%, vorzugsweise 0,1 bis 10 Gew.-%, insbesondere 0,4 bis 5 Gew.-% Tenside aus der Klasse der Polyacrylsäurederivate,
(d) 0,05 bis 15 Gew.-%, vorzugsweise 0,1 bis 8 Gew.-%, insbesondere 0,3 bis 5 Gew.-% Aluminiumsilikate als Stabilisator,
(e) 0 bis 80 Gew.-%, vorzugsweise 0 bis 70 Gew.-%, insbesondere 0 bis 60 Gew.-% nichtionogene, anionaktive, kationaktive und/oder zwitterionische Tenside,
(f) 0 bis 30 Gew.-%, vorzugsweise 0 bis 20 Gew.-%, vorzugsweise 0 bis 15 Gew.-%, übliche Formulierungshilfsmittel und
(g) 0,1 bis 90 Gew.-%, vorzugsweise 5 bis 70 % Wasser, vorzugsweise 10 bis 50 % Wasser,
enthalten.

Die Herstellung der erfindungsgemäßen Formulierungen erfolgt nach an sich bekannten Verfahren, indem man Wasser, Wirkstoff (a) in fester oder schon gelöster Form, alle Hilfsmittel und letztendlich zu dispergierenden Wirkstoff (b) gegebenenfalls unter Rühren mischt und homogenisiert, z. B. in einem Kessel, und mit geeigneten Mitteln, beispielsweise über Kolloid- und/oder Reibkugelmühlen, auf die erforderliche Partikelgröße zerkleinert.

Die erfindungsgemäßen Formulierungen zeichnen sich durch ein gute Lagerfähigkeit und ein gutes Fließverhalten aus. Vorteilhaft ist auch das gänzliche Fehlen oder der geringe Anteil an organischen Lösungsmitteln. Die Coformulierungen weisen außerdem eine hohe Bioverfügbarkeit und damit Wirksamkeit der kombinierten Pflanzenschutzmittelwirkstoffe auf.

Folglich eignen sich die erfindungsgemäßen Formulierungen in besonderem Maße zur Anwendung im Pflanzenschutz, z. B. im Falle, dass herbizide Wirkstoffe enthalten sind, zur Bekämpfung unerwünschten Pflanzenwuchses sowohl im Nichtkulturland als auch in toleranten Kulturen.

In den nachfolgenden Tabellen 1 und 2 sind Beispiele der erfindungsgemäßen Formulierungen angeführt. Die Formulierungen sind über 3 Monate bei 50°C lagerstabil und insbesondere auch hinsichtlich des Fließverhaltens stabil.

**Tabelle 1: Formulierungen (erfindungsgemäß)**

| | 1 ⁽¹⁾ | 2 | 3 | 4 | 5 | 6 | 7 | 8 | 9 |
|---|---|---|---|---|---|---|---|---|---|
| Glufosinate-ammonium (AS) | 21,74 | 21,55 | 21,55 | 21,55 | 21,55 | 21,55 | 21,55 | 21,55 | 21,55 |
| Oxyfluorfen (AS) | 4,51 | 4,47 | 4,38 | 4,47 | 4,38 | 4,56 | 4,43 | 4,38 | 4,43 |
| Genapol LRO-Paste | 35,00 | 30,00 | 30,00 | 30,00 | 30,00 | 30,00 | 30,00 | 30,00 | 30,00 |
| Sokalan CP 10 | 1,00 | 1,50 | 1,00 | 2,00 | 1,00 | 1,00 | 1,00 | 1,00 | 1,00 |
| Clarsol ATC | 2,50 | 3,00 | 3,00 | 3,00 | 3,00 | 3,00 | 3,00 | 3,00 | 3,00 |
| Propylenglykol | 10,00 | 10,00 | 10,00 | 10,00 | 10,00 | 10,00 | 10,00 | 6,00 | 5,00 |
| Rhodorsil 416 | 1,50 | 1,50 | 1,50 | 1,50 | | | | 1,50 | 1,50 |
| Rhodorsi1481 ⁽³⁾ | | | | | 1,50 | 1,00 | 0,75 | | |
| Wasser (ad 100%) | ad 100 | ad 100 | ad 100 | ad 100 | ad 100 | ad 100 | ad 100 | ad 100 | ad 100 |

| | | | | | | | | | |
|---|---|---|---|---|---|---|---|---|---|
| Abkkürzungen: siehe nach Tabelle 2 | | | | | | | | | |

**Tabelle 2: Formulierungen (erfindungsgemäß)**

| | 10⁽¹⁾ | 11 | 12 | 13 | 14 | 15 | 16 |
|---|---|---|---|---|---|---|---|
| Glufosinate-ammonium (AS) | 21,55 | 17,24 | 15,68 | 14,37 | 10,78 | 21,55 | 10,78 |
| Oxyfluorfen (AS) | 4,36 | 3,25 | 3,20 | 2,93 | 2,43 | 4,31 | 2,15 |
| Genapol LRO-Paste | 30,00 | 24,00 | 21,82 | 20,00 | 15,00 | 30,00 | 15,00 |
| Sokalan CP 10 | 1,00 | 0,80 | 0,73 | 0,67 | 0,50 | 1,00 | 0,50 |
| Clarsol ATC | 3,00 | 2,40 | 2,18 | 3,00 | 1,00 | 3,00 | 1,50 |
| Propylenglykol | 10,00 | 8,00 | 7,27 | 10,00 | 6,67 | 10,00 | 5,00 |
| Rhodorsil 416 | | 1,20 | 1,09 | 1,00 | 0,75 | | |
| Rhodorsil 481 ⁽³⁾ | 0,60 | | | | | 1,50 | 0,75 |
| Wasser (ad 100%) | ad 100 | ad 100 | ad 100 | ad 100 | ad 100 | ad 100 | ad 100 |

| | | | | | | | |
|---|---|---|---|---|---|---|---|
| AS Mengenangabe bezogen auf Aktivsubstanz (= active ingredient, a.i.) ⁽¹⁾ In den Spalten sind die Zusammensetzungen der Formulierungen 1 bis 9 (in Tabelle 1) bzw. 10 bis 16 (in Tabelle 2) angegeben, wobei die jeweilige Zeile die Menge der in der ersten Spalte bezeichneten Komponente in Gewichtsprozent enthält; | | | | | | | |

- ®Genapol LRO-Paste = C₁₂/C₁₄-Fettalkoholdiethylenglykolethersulfat, eingesetzt als 68%ige wäßrige Lösung, Clariant)
- ®Sokalan CP10 = modifizierte Polyacrylsäure, Natriumsalz; BASF)
- ®Clarsol ATC = ein faser-stoffartiges Magnesium- und Aluminiumsilikat-Attapulgit
- ®Rhodorsil 481 (Polydimethylsiloxan mit Kieselgel, Rhodia)
- ®Rhodorsil 416 (Polydimethylsiloxan mit Kieselgel und Tensid, Rhodia)
- Die Menge an Wasser ist als ad 100% angegeben und schließt auch geringe Mengen an nicht wässrigen Nebenbestandteilen ein, welche in einigen eingesetzten Komponenten enthalten sein können, beispielsweise, Farbstoffe, Konservierungsstoffe, etc.

### Biologische Beispiele

Die Formulierungen gemäß Tabellen 1 und 2 wurden mit Wasser verdünnt und mit einer Wasseraufwandmenge von 200 l/ha auf Nichtkulturland appliziert, das ein unter natürlichen Bedingungen aufgelaufenes Spektrum von Schadpflanzen enthielt. Die Bewertung nach 4 Wochen ergab, daß die grünen Teile der Schadpflanzen abgestorben waren und somit eine gute Kontrolle der Schadpflanzen erreicht worden ist.

## Patentansprüche

1. Flüssige wässrige Pflanzenschutzmittel, **dadurch gekennzeichnet, dass** sie
(a) einen oder mehrere in Wasser lösliche Pflanzenschutzmittelwirkstoffe (Wirkstoffe vom Typ (a)),
(b) einen oder mehrere in Wasser als feste Partikel dispergierte Pflanzenschutzmittelwirkstoffe (Wirkstoffe vom Typ (b)).
(c) ein oder mehrere Tenside aus der Klasse der Polyacrylsäurederivate
(d) ein oder mehrere Aluminiumsilkate als Stabilisator,
(e) gegebenenfalls weitere anionaktive oder auch nichtionogene, kationaktive und/oder zwitterionische Tenside,
(f) gegebenenfalls andere übliche Formulierungshilfsmittel und
(g) Wasser
enthalten.

2. Pflanzenschutzmittel nach Anspruch 1, **dadurch gekennzeichnet, dass** sie
(a) 1 bis 60 Gew.% in Wasser lösliche Pflanzenschutzmittelwirkstoffe (Wirkstoffe vom Typ (a)),
(b) 0,5 bis 30 Gew.% in Wasser unlösliche als feste Partikel dispergierte Pflanzenschutzmittelwirkstoffe (Wirkstoffe vom Typ (b)),
(c) 0,05 bis 15 Gew.-% Tenside aus der Klasse der Polyacrylsäurederivate,
(d) 0,05 bis 15 Gew.% Aluminiumsilikate als Stabilisator,
(e) 0 bis 80 Gew.-% nichtionogene, anionaktive, kationaktive und/oder zwitterionische Tenside,
(f) 0 bis 30 Gew.-% übliche Formulierungshilfsmittel und
(g) 0,1 bis 90 Gew.-% Wasser
enthalten.

3. Pflanzenschutzmittel nach Anspruch 1 oder 2, **dadurch gekennzeichnet, dass** als Wirkstoff vom Typ (a) ein Wirkstoff aus der Gruppe der Salze von Glufosinate, Glyphosate, Paraquat, Diquat, MCPA, CMPP, loxynil, Bromoxynil, 2,4-D, TCA und 2,4-DP oder deren Mischungen enthalten ist.

4. Pflanzenschutzmittel nach einem der Ansprüche 1 bis 3, **dadurch gekennzeichnet, dass** als Wirkstoff vom Typ (a) ein Salz von Glufosinate enthalten ist.

5. Pflanzenschutzmittel nach einem der Ansprüche 1 bis 4, **dadurch gekennzeichnet, dass** der Wirkstoff vom Typ (a) Glufosinate-ammonium ist.

6. Pflanzenschutzmittel nach einem der Ansprüche 1 bis 5, **dadurch gekennzeichnet, dass** als Wirkstoff vom Typ (b) ein Wirkstoff aus der Gruppe Oxyfluorfen, Lactofen, Bifenox, Fluoroglycofen, Acifluorfen, Fomesafen, Diclofop-methyl, Fenoxaprop-ethyl und Fenoxaprop-P-ethyl enthalten ist.

7. Pflanzenschutzmittel nach einem der Ansprüche 1 bis 6, **dadurch gekennzeichnet, dass** der Wirkstoff vom Typ (b) Oxyfluorfen ist.

8. Pflanzenschutzmittel nach einem der Ansprüche 1 bis 7, **dadurch gekennzeichnet, dass** das Gewichtsverhältnis von gelösten Wirkstoffen (a) zu dispergierten Wirkstoffen (b) 15:1 bis 1:12 beträgt.

9. Pflanzenschutzmittel nach einem der Ansprüche 1 bis 8, **dadurch gekennzeichnet, dass** das Gewichtsverhältnis von Tensid (c) zu Aluminiumsilikat (d) 15: bis 1:20 beträgt.

10. Verfahren zur Herstellung von einem nach einem der Ansprüche 1 bis 9 definierten Pflanzenschutzmittel, **dadurch gekennzeichnet, dass** man die Komponenten (a) bis (f) und gegebenenfalls weitere Komponenten, die in der Formulierung enthalten sind, mit Wasser (Komponente (g)) vermischt.

11. Verfahren zur Bekämpfung von unerwünschtem Pflanzenwuchs, **dadurch gekennzeichnet, dass** man eine wirksame Menge eines Pflanzenschutzmittels gemäß einem der Ansprüche 1 bis 9, das mindestens einen herbiziden Wirkstoff enthält, auf die Pflanzen, Pflanzenteile oder die Anbaufläche appliziert.

12. Verwendung von Mitteln gemäß einem der Ansprüche 1 bis 9 zur Kontrolle von Schadorganismen im Pflanzenschutz oder im Nichtkulturland, wobei die in den Mitteln enthaltenen Wirkstoffe gegen die Schadorganismen wirksam sind.

## Claims

1. A liquid aqueous crop protectant composition which comprises
(a) one or more water-soluble active crop protectant ingredients (type (a) ingredients),
(b) one or more active crop protectant ingredients dispersed in water as solid particles (type (b) ingredients),
(c) one or more surfactants from the class of the polyacrylic acid derivatives,
(d) one or more aluminum silicates as stabilizer(s),
(e) if desired, further anionic or nonionic, cationic and/or zwitterionic surfactants,
(f) if desired, other customary formulation assistants, and
(g) water.

2. The crop protectant composition as claimed in claim 1, which comprises
(a) 1% to 60% by weight of water-soluble active crop protectant ingredients (type (a) ingredients),
(b) 0.5% to 30% by weight of water-insoluble active crop protectant ingredients dispersed as solid particles (type (b) ingredients),
(c) 0.05% to 15% by weight of surfactants from the class of the polyacrylic acid derivatives,
(d) 0.05% to 15% by weight of aluminum silicates as stabilizer(s),
(e) 0 to 80% by weight of nonionic, anionic, cationic and/or zwitterionic surfactants,
(f) 0 to 30% by weight of customary formulation assistants, and
(g) 0.1 % to 90% by weight of water.

3. The crop protectant composition as claimed in claim 1 or 2, comprising as type (a) ingredient an active ingredient from the group of the salts of glufosinate, glyphosate, paraquat, diquat, MCPA, CMPP, ioxynil, bromoxynil, 2,4-D, TCA and 2,4-DP or mixtures thereof.

4. The crop protectant composition as claimed in any one of claims 1 to 3, comprising as type (a) ingredient a salt of glufosinate.

5. The crop protectant composition as claimed in any one of claims 1 to 4, comprising as type (a) ingredient glufosinate-ammonium.

6. The crop protectant composition as claimed in any one of claims 1 to 5, comprising as type (b) ingredient an active ingredient from the group consisting of oxyfluorfen, lactofen, bifenox, fluoroglycofen, acifluorfen, fomesafen, diclofop-methyl, fenoxaprop-ethyl and fenoxaprop-P-ethyl.

7. The crop protectant composition as claimed in any one of claims 1 to 6, comprising as type (b) ingredient oxyfluorfen.

8. The crop protectant composition as claimed in any one of claims 1 to 7, wherein the weight ratio of dissolved ingredients (a) to dispersed ingredients (b) amounts to 15:1 to 1:12.

9. The crop protectant composition as claimed in any one of claims 1 to 8, wherein the weight ratio of surfactant (c) to aluminum silicate (d) amounts to 15:1 to 1:20.

10. A process for preparing a crop protectant composition as defined in any one of claims 1 to 9, which comprises mixing components (a) to (f) and any further components present in the formulation with water (component (g)).

11. A method of controlling unwanted plant growth, which comprises applying an effective amount of a crop protectant composition as claimed in any one of claims 1 to 9, comprising at least one active herbicidal ingredient, to the plants, parts of plants or the cultivation area.

12. The use of a composition as claimed in any one of claims 1 to 9 for controlling harmful organisms in crop protection or on uncultivated land, the active ingredients present in the compositions being active against the harmful organisms.

## Revendications

1. Compositions phytosanitaires liquides aqueuses, **caractérisées en ce qu'**elles contiennent
(a) une ou plusieurs substances actives phytosanitaires solubles dans l'eau (substances actives du type (a))
(b) une ou plusieurs substances actives phytosanitaires dispersées dans l'eau sous forme de particules solides (substances actives du type (b)),
(c) un ou plusieurs agents tensio-actifs de la classe des dérivés polymères d'acide acrylique,
(d) un ou plusieurs silicates d'aluminium comme agent stabilisant,
(e) le cas échéant, d'autres agents tensio-actifs à activité anionique ou aussi non ionogènes, à activité cationique et/ou zwitterioniques,
(f) le cas échéant, d'autres substances couramment employées comme auxiliaires de formulation et
(g) de l'eau.

2. Compositions phytosanitaires suivant la revendication 1, **caractérisées en ce qu'**elles contiennent
(a) 1 à 60 % en poids de substances actives phytosanitaires solubles dans l'eau (substances actives du type (a))
(b) 0,5 à 30 % en poids de substances actives phytosanitaires insolubles dans l'eau dispersées sous forme de particules solides (substances actives du type (b)),
(c) 0,05 à 15 % en poids d'agents tensio-actifs de la classe des dérivés polymères d'acide acrylique,
(d) 0,05 à 15 % en poids de silicates d'aluminium comme agent stabilisant,
(e) 0 à 80 % en poids d'agents tensio-actifs à activité anionique ou aussi non ionogènes, à activité cationique et/ou zwitterioniques,
(f) 0 à 30 % en poids de substances couramment employées comme auxiliaires de formulation et
(g) 0,1 à 90 % en poids d'eau.

3. Compositions phytosanitaires suivant la revendication 1 ou 2, **caractérisées en ce qu'**elles contiennent comme substance active du type (a) une substance active du groupe des sels de glufosinate, de glyphosate, de paraquat, de diquat, de MCPA, de CMPP, de loxynil, de bromoxynil, de 2,4-D, de TCA et de 2,4-DP ou des mélanges de ces sels.

4. Compositions phytosanitaires suivant l'une des revendications 1 à 3, **caractérisées en ce qu'**elles contiennent un sel de glufosinate comme substance active du type (a).

5. Compositions phytosanitaires suivant l'une des revendications 1 à 4, **caractérisées en ce qu'**elles contiennent du glufosinate-ammonium comme substance active du type (a).

6. Compositions phytosanitaires suivant l'une des revendications 1 à 5, **caractérisées en ce qu'**elles contiennent comme substance active du type (b) une substance active du groupe oxyfluorfène, lactofène, bifénox, fluoroglycofène, acifluorfène, fomésafène, diclofop-méthyl, fénoxaprop-éthyl et fénoxaprop-P-éthyl.

7. Compositions phytosanitaires suivant l'une des revendications 1 à 6, **caractérisées en ce** la substance active du type (b) est l'oxyfluorfène.

8. Compositions phytosanitaires suivant l'une des revendications 1 à 7, **caractérisées en ce que** le rapport en poids des substances actives (a) dissoutes aux substances actives (b) dispersées a une valeur de 15:1 à 1:12.

9. Compositions phytosanitaires suivant l'une des revendications 1 à 8, **caractérisées en ce que** le rapport en poids de l'agent tensio-actif (c) au silicate d'aluminium a une valeur de 15:1 à 1:20.

10. Procédé de production d'une composition phytosanitaire définie suivant l'une des revendications 1 à 9, **caractérisé en ce qu'**on mélange avec de l'eau (composant (g)) les composants (a) à (f) et, le cas échéant, d'autres composants qui sont contenus dans la formulation.

11. Procédé pour combattre une végétation indésirable, **caractérisé en ce qu'**on applique une quantité efficace de composition phytosanitaire suivant l'une des revendications 1 à 9, qui contient au moins une substance active herbicide, sur les plantes, sur des parties de plantes ou sur la surface cultivée.

12. Utilisation de compositions suivant l'une des revendications 1 à 9 en vue de combattre des organismes nuisibles, pour la protection des plantes ou sur des terres de non-culture, les substances actives contenues dans les compositions étant efficaces contre les organismes nuisibles.
